(19) **Europäisches Patentamt / European Patent Office / Office européen des brevets**

(11) **EP 4 523 920 A1**

(12) **EUROPEAN PATENT APPLICATION**
published in accordance with Art. 153(4) EPC

(43) Date of publication:
**19.03.2025 Bulletin 2025/12**

(21) Application number: **23823785.3**

(22) Date of filing: **06.06.2023**

(51) International Patent Classification (IPC):
**B41M 5/00** (2006.01)　　**B41J 2/01** (2006.01)
**C09D 11/54** (2014.01)　　**D06P 1/44** (2006.01)
**D06P 5/30** (2006.01)

(52) Cooperative Patent Classification (CPC):
**B41J 2/01; B41M 5/00; C09D 11/54; D06P 1/44;
D06P 5/30**

(86) International application number:
**PCT/JP2023/021040**

(87) International publication number:
**WO 2023/243493 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.06.2022 JP 2022096193**

(71) Applicant: **Kyocera Corporation
Kyoto-shi, Kyoto 612-8501 (JP)**

(72) Inventors:
• **SUGIMOTO, Hiroko
Kyoto-shi, Kyoto 612-8501 (JP)**
• **HOBO, Jumpei
Kyoto-shi, Kyoto 612-8501 (JP)**
• **TORIYAMA, Go
Kyoto-shi, Kyoto 612-8501 (JP)**
• **HIOKI, Jun
Kyoto-shi, Kyoto 612-8501 (JP)**

(74) Representative: **Viering, Jentschura & Partner
mbB
Patent- und Rechtsanwälte
Am Brauhaus 8
01099 Dresden (DE)**

(54) **PROCESSING LIQUID FOR INKJET PRINTING, AND INK SET AND TEXTILE PRINTING METHOD EACH USING SAME**

(57) One aspect of the present disclosure relates to a treatment liquid for inkjet printing, the treatment liquid containing a cationic polymer and succinic acid, and having a halogen ion concentration of equal to or less than 5 g/L and a pH of 7 to 9.5.

FIG. 1

EP 4 523 920 A1

## Description

TECHNICAL FIELD

The present disclosure relates to a treatment liquid for inkjet printing. The present disclosure further relates to an ink set and a textile printing method each using the treatment liquid for inkjet printing.

BACKGROUND OF INVENTION

A known inkjet recording method includes application of a pre-treatment liquid prior to ink application. For example, a reported method includes using of a treatment liquid that contains fine particles as a component which forms an aggregate with a coloring material in an ink.

Patent Document 1 discloses an inkjet recording method in which a colorless liquid containing silica fine particles is deposited on a recording material, and then a non-aqueous recording liquid containing oil black is deposited on the recording material. Patent Document 2 discloses that a solution containing fine particles or fine particles and a binder polymer is used as a treatment liquid.

A large amount of reaction components can be added in such liquid containing fine particles, because reactive fine particles are included in a dispersed state. However, a liquid composition containing the reactive fine particles inevitably contains corrosive ions during the production process of the components, and is added with corrosive ions such as chlorine ions and acids as secondary ions in order to ensure the dispersion stability of the component that is reactive with coloring materials. Because of the reasons set forth above and the like, the liquid composition contains a high concentration of corrosive ions. Accordingly, when the liquid composition is used as it is as an ingredient of a treatment liquid, a problem of liquid contact due to the corrosive ion occurs in many cases, and a metal-based material of a head that ejects the treatment liquid is liable to be dissolved.

Regarding the problem of the liquid contact property caused by the corrosive ions, an improvement of the liquid contact property has been reported when the chloride ion concentration is regulated to be equal to or less than 3000 ppm in the treatment liquid containing the cationic polymer (Patent Document 3). Also reported is a method for producing a treatment liquid, wherein corrosive ions (halogen ions) are replaced with less corrosive ions by an ion exchange process of replacing ions through an ion exchange technique during the production process in production of a treatment liquid containing one or more components reactive with a coloring material (Patent Document 4).

CITATION LIST

PATENT LITERATURE

Patent Document 1: JP H04-259590 A
Patent Document 2: JP H06-92010 A
Patent Document 3: JP H10-237372 A
Patent Document 4: JP 2004-90456 A

SUMMARY

In one aspect of the present disclosure, a treatment liquid for inkjet printing contains a cationic polymer and succinic acid. The treatment liquid for inkjet printing has a halogen ion concentration of equal to or less than 5 g/L, and a pH of 7 to 9.5.

BRIEF DESCRIPTION OF THE DRAWINGS

FIG. 1 is an example of inkjet recording performed by using a treatment liquid for inkjet printing of the present embodiment.
FIG. 2 is a perspective view illustrating an overall configuration of a recording apparatus according to an embodiment of the present disclosure.
FIG. 3 is a schematic cross-sectional view taken along line III-III of FIG. 2.
FIG. 4 is an enlarged perspective view of a carriage illustrated in FIG. 2.

DESCRIPTION OF EMBODIMENTS

The aforementioned Patent Document 3 describes that a cationic polymer, a cationic surfactant, or the like is used as the cationic substance included in the liquid composition, and the liquid composition contains some chlorine ions such as a hydrochloride radical resulting from an acid treatment or the like performed at the time of synthesis and purification of the cationic polymer, the cationic surfactant, or the like (in paragraph 0008). Therefore, when the chlorine concentration is equal to or less than 3000 ppm, the addition amount of the cationic polymer as a component reactive with the coloring material cannot be increased, and an adequate aggregation effect with the coloring material is thought to be impossible to be obtained.

When halogen ions are removed by an ion exchange process as in the technique described in Patent Document 4, the cationic polymer becomes unstable to heat, and therefore a problem of yellowing of a portion coated with the treatment liquid upon heating has come to be understood.

On the other hand, all of the aforementioned Patent Documents 1 to 4 describe treatment liquids for inkjet printing in order for performing printing on a paper medium such as plain paper, which are not intended to be used for textile printing on fabric such as cloth. When inkjet recording is used for textile printing, a treatment liquid containing a binding resin is usually used in a pre-processing. This binding resin penetrates into the gaps between the fibers and binds the fibers to each other, and thus a problem peculiar to textile printing has also occurred in which the fabric becomes stiff and the texture such as feeling is compromised.

Hereinafter, embodiments of the present disclosure will be specifically described, however, the present invention is not limited to these embodiments.

[TREATMENT LIQUID FOR INKJET PRINTING]

A treatment liquid for inkjet printing according to an embodiment of the present disclosure (hereinafter, also simply referred to as a "treatment liquid") contains a cationic polymer and succinic acid, has a halogen ion concentration of equal to or less than 5 g/L, and has a pH of 7 to 9.5.

The treatment liquid of the present embodiment is a pre-treatment liquid to be applied to a recording object prior to ink application. The cationic polymer contained in the treatment liquid reacts with a pigment contained in an ink to be applied thereafter and aggregates, and excellent color developability can be ensured.

That is, the treatment liquid for inkjet printing of the present disclosure can suppress the corrosion of an inkjet head member and yellowing of a recording medium in inkjet recording, and excellent color developability (image density) can be obtained. When used in textile printing, the treatment liquid for inkjet printing of the present disclosure further provides an advantage of improving the texture of the fabric as well.

In the present embodiment, the treatment liquid has a low halogen ion concentration, thereby enabling to suppress the corrosion of the inkjet head member due to the halogen ions. The treatment liquid contains succinic acid and has a pH within the range set forth above, thereby enabling to suppress yellowing of the cationic polymer having a low halogen concentration. That is, in the present embodiment, yellowing of the treatment liquid can be suppressed. Furthermore, since the yellowing of the recording medium can be suppressed, for example, when the treatment liquid of the present embodiment is used for textile printing, the yellowing of fabrics of textiles to be printed can be suppressed.

The treatment liquid of the present embodiment contains succinic acid, and a salt of succinic acid has higher solubility in an aqueous solvent (water and an organic solvent that dissolves in water) than that of a salt of lactic acid or the like. The blending amount of the cationic polymer is preferably increased to enhance the effect of the treatment liquid described above, but a sufficient amount of a salt of lactic acid or the like may be impossible to be blended from a point of view of the solubility thereof. In this regard, a salt of succinic acid has high solubility, and thus a sufficient amount of the cationic polymer can be blended, and hence excellent color developability and excellent texture of the fabric can be obtained while suppressing yellowing.

That is, the treatment liquid for inkjet printing of the present embodiment can suppress corrosion of an inkjet head member and yellowing of a recording medium and can provide excellent color developability (image density) in inkjet recording. When the treatment liquid for inkjet printing of the present embodiment is used in textile printing, an advantage of improving the texture of fabric is provided.

In the present embodiment, the cationic polymer contained in the treatment liquid for inkjet printing is not particularly limited as long as it is a positively charged cationic polymer, and examples thereof include cationic polymers such as ammonium-containing polymers, amine-containing polymers, polyallylamine, polyvinylamine, polyimine, polyvinylpyrrolidone, polyethyleneimine, polyvinylpyridine, aminoacetalized polyvinyl alcohol, ionene polymers, polyvinylimidazole, polyvinyl benzylphosphonium, polyalkyl allylammonium, polyamidine, and polyamine sulfone. Among them, from a point of view of achieving more excellent color developability, particularly preferable examples thereof include a quaternary ammonium-containing polymer, a diallyldimethylammonium-sulfur dioxide copolymer, a diallyldimethylammonium chloride-acrylamide copolymer, a diallyldimethylammonium chloride polymer, a dimethylamine-ammonia-epichlorohydrin polycondensate, and a dimethylamine-ammonia-epichlorohydrin polycondensate. One type thereof may be used singly, or two or more types thereof may be used in combination as well.

The weight average molecular weight of the cationic polymer used in the present embodiment is not particularly limited, but is preferably about in a range from 1000 to 10000. When the molecular weight is within this range, an ink ejection property from an inkjet head is thought to be more excellent.

The content of the cationic polymer is preferably 0.3 wt% or more and 35 wt% or less based on the entirety of the treatment liquid. When the content of the cationic polymer is within the range set forth above, the color developability (image density) is thought to be further enhanced and further suppression of yellowing of the recording medium is thought to be enabled. The lower limit of the content of the cationic polymer is more preferably 0.5 wt% or more, still more preferably 1 wt% or more. The upper limit of the content of the cationic polymer is more preferably equal to or less than 29.5 wt%, still more preferably equal to or less than 20 wt%.

In the present embodiment, the treatment liquid further contains succinic acid, but the succinic acid may be contained in the form of succinate ions.

The content of the succinic acid is preferably equal to or less than 20 wt% based on the entirety of the treatment liquid. When the content of succinic acid is within the range set forth above, the color developability (image density) is thought to be further enhanced and further suppression of yellowing of the recording medium is thought to be enabled. The upper limit of the content of the succinic acid is more preferably equal to or less than 18 wt%, still more preferably equal to or less than 15 wt%.

The lower limit of the succinic acid content is not particularly limited, but is preferably 0.5 wt% or more, more preferably 1 wt% or more from a point of view of achieving an effect of stabilizing the cationic polymer.

In the present embodiment, the treatment liquid preferably has a weight ratio of the cationic polymer to the succinic acid (cationic polymer/succinic acid) of 0.20 or more and 3.50 or less. This weight ratio provides an advantage of stabilizing the cationic polymer. The weight ratio is more preferably in the range of 0.25 or more and 3.00 or less.

In the treatment liquid of the present embodiment, the balance other than the above-described components is usually water or an aqueous solvent composed of water and an organic solvent.

Examples of the organic solvent that can be contained in the treatment liquid include glycols, alcohols, aliphatic hydrocarbons, aromatic hydrocarbons, ketones, esters, ethers, and vegetable oils. Examples of the water-soluble organic solvent include polyhydric alcohols, ether compounds of polyhydric alcohols, nitrogen-containing compounds, alcohol compounds, sulfur-containing compounds, propylene carbonate, and ethylene carbonate.

Examples of the polyhydric alcohol include a first diol compound having 5 carbon atoms or more and 8 carbon atoms or less, a second diol compound having 2 carbon atoms or more and 4 carbon atoms or less, 1,2,6-hexanetriol, glycerin, trimethylolpropane, a sugar alcohol (such as xylitol), and a saccharide (such as xylose, glucose, and galactose).

Examples of the first diol compound include 2-methylpentane-2,4-diol, triethylene glycol, tetraethylene glycol, 1,5-pentanediol, and 1,2-hexanediol.

Examples of the second diol compound include ethylene glycol, 1,2-propanediol, 1,3-propanediol, butylene glycol, and diethylene glycol.

Examples of the ether compound of a polyhydric alcohol include ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, propylene glycol monobutyl ether, dipropylene glycol monobutyl ether, and an ethylene oxide adduct of diglycerin.

Examples of the nitrogen-containing compound include pyrrolidone, N-methyl-2-pyrrolidone, cyclohexyl pyrrolidone, and triethanolamine.

Examples of the alcohol compound include ethanol, isopropyl alcohol, butyl alcohol, and benzyl alcohol.

Examples of the sulfur-containing compound include thiodiethanol, thiodiglycerol, sulfolane, and dimethyl sulfoxide.

Among the organic solvents set forth above, glycols such as propylene glycol are preferably used. One type thereof may be used singly, or two or more types thereof may be used in combination.

When the treatment liquid contains an organic solvent, the content of the organic solvent is preferably 3 wt% or more and 50 wt% or less based on the entirety of the treatment liquid. Inclusion of the organic solvent within the range set forth above can provide a treatment liquid having such a viscosity that it can be stably ejected and an advantage of enabling to reduce drying of the treatment liquid.

In the present embodiment, the treatment liquid may further contain a surfactant for the purpose of adjusting the surface tension to an appropriate level. The surfactant that can be used is not particularly limited, and examples thereof include nonionic surfactants, cationic surfactants, and anionic surfactants.

When the treatment liquid contains a surfactant, the content of the surfactant is preferably 0.1 wt% or more and 5 wt% or less based on the entirety of the treatment liquid. Inclusion of the surfactant within the range set forth above provides an advantage of enabling to afford a treatment liquid having such a surface tension that it can be stably ejected.

In the present embodiment, the treatment liquid may contain other additives as long as the effects of the present embodiment are not compromised. Examples of the additive include a dissolution stabilizer, an anti-drying agent, an antioxidant, a viscosity modifier, a pH adjuster, and an antifungal agent.

In the treatment liquid of the present embodiment, as described above, the halogen ion concentration is equal to or less than 5 g/L and the pH is from 7 to 9.5. The adjustment of the halogen ion concentration can be made by using an ion exchange resin as described later to afford a cationic polymer having an adjusted halogen ion concentration.

The adjustment of the pH of the treatment liquid can be made by adjusting the amount of succinic acid added, for example.

The treatment liquid more preferably has a halogen ion concentration of equal to or less than 3 g/L. The treatment liquid more preferable has a pH range of 7 to 9.

[METHOD FOR PRODUCING TREATMENT LIQUID]

In the present embodiment, a method for producing the treatment liquid is not particularly limited, and an example thereof will be described. First, a column is filled with a basic ion exchange resin, and a cationic polymer is allowed to pass through the column to afford an adjusted cationic polymer having a reduced halogen ion concentration.

The resultant adjusted cationic polymer, succinic acid, an aqueous solvent, and a component added as necessary (such as a surfactant and/or the like) are mixed, thereby enabling to afford the treatment liquid of the present embodiment.

[INKJET RECORDING METHOD USING TREATMENT LIQUID]

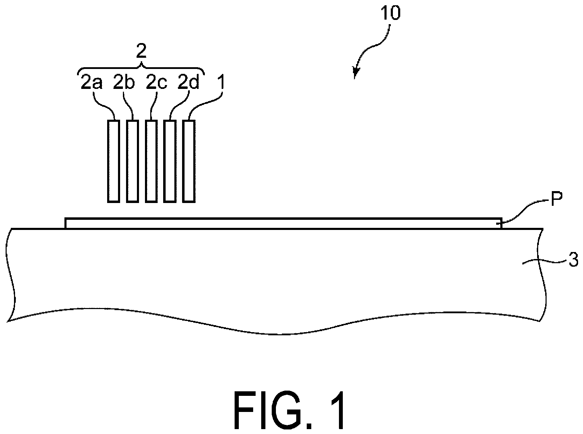

A method of using the treatment liquid and the like of the present embodiment will be described. In the present embodiment, the treatment liquid can be used, for example, as a pre-treatment liquid in an inkjet recording apparatus 10 as illustrated in FIG. 1.

Specifically, the inkjet recording apparatus 10 illustrated in FIG. 1 may include a processing head 1 and a recording head 2, and the recording head 2 may include a first recording head 2a, a second recording head 2b, a third recording head 2c, and a fourth recording head 2d.

The processing head 1 is configured to eject a treatment liquid for pre-processing prior to image formation onto at least an image forming area of the recording object P. The treatment liquid used here is the above-described treatment liquid. The processing head 1 is not particularly limited, and examples thereof include a piezo inkjet head and a thermal inkjet head. The inkjet textile printing apparatus 10 of the present embodiment may further include one or more treatment liquid tanks (not illustrated) that store the treatment liquid. In this configuration, the treatment liquid is fed from the one or more treatment liquid tanks to the processing head 2.

The recording head 2 is configured to eject ink to the image forming area of the recording object P. The recording head 2 includes the first recording head 2a, the second recording head 2b, the third recording head 2c, and the fourth recording head 2d, each of which is configured to eject an ink of different colors (e.g., yellow ink, magenta ink, cyan ink, and black ink). The number of recording heads is not limited to four, and may be from one to three, or five or more. The recording head 2 is not particularly limited, and examples thereof include a piezo inkjet head and a thermal inkjet head.

The recording object P is placed on a placement table 3. The processing head 1 and the recording head 2 are disposed above the placement table 3 in a manner that the treatment liquid and the ink can be ejected onto the recording object P. Driving of a motor (not illustrated) moves the placement table 3 horizontally in a direction from the processing head 1 toward the recording head 2 (for example, in the left direction in FIG. 1). Horizontal movement of the placement table 3 conveys the recording object P on the placement table 3.

In the present embodiment, the recording object P is not particularly limited and may be a medium such as plain paper. However, the treatment liquid of the present embodiment can exhibit further effects when used for textile printing. Therefore, the recording object P is preferably a medium that can be a textile to be printed.

In the formation of the inkjet recording, first, the placement table 3 having the recording object P disposed thereon moves horizontally, and thus the recording object P is conveyed to a position facing the processing head 1. The treatment liquid is ejected from the processing head 1 to the recording object P. The processing head 1 may eject the treatment liquid only onto the image forming area of the recording object P, may eject the treatment liquid onto an area wider than the image forming area of the recording object P, or may eject the treatment liquid to the entire surface of the recording object P. The processing head 1 preferably ejects the treatment liquid only onto the image forming area of the recording object P in order to reduce the amount of the treatment liquid used, thereby suppressing a decrease in the sense of touch of the printed textile.

After the treatment liquid has been ejected from the processing head 1, the placement table 3 having the recording object P disposed thereon moves further horizontally, and thus the recording object P is conveyed to a position facing the recording head 2. Then, the recording head 2 ejects ink onto the image forming area of the recording object P. In this manner, the ink forms an image in the image forming area of the recording object P.

Although not illustrated, after the recording head 2 ejects the ink, the placement table 3 having the recording object P disposed thereon may further move horizontally, and then another processing head may eject the post-treatment liquid. The post-treatment liquid refers to a treatment liquid of non-chromogenic property that does not develop color even when deposited on the recording object P in the same as and/or similar manner, and is a treatment liquid that exhibits a function of enhancing fixability and fastness (resistance to rubbing and scraping) of an ink image printed on the recording object P by the recording head 2 . As such a post-treatment liquid, a silicone-based treatment liquid or the like can be used. In this manner, the post-treatment liquid forms a processed film on the image formed in the image forming area of the recording object P.

After the post-treatment liquid has been ejected, the placement table 3 having the recording object P thereon further moves horizontally to convey the recording object P to a position facing a heater (not illustrated), and the heater applies heat to the recording object P to thereby dry the ink and the treatment liquid. The heating temperature is, for example, 120°C or more and not higher than 180°C. The heating time is, for example, 1 minute or longer and not longer than 10 minutes. The heating dries volatile components contained in the ink and in the treatment liquid, thereby facilitating the fixation of the ink and the treatment liquid onto the recording object P. As a result, the recording object P having an image formed by the ink and processed by the treatment liquid is formed.

Note that the treatment liquid of the present embodiment is not limited to be used in the inkjet recording apparatus 10, and can be changed so as to be, for example, as shown in the following variation. For example, the inkjet recording apparatus 10 may include a spray configured to spray the treatment liquid, in place of the processing head 1 configured to eject the treatment liquid. Alternatively, the processing with the treatment liquid may be implemented by immersing the recording object P into a tank in which the treatment liquid is stored. In the inkjet recording apparatus 10, the placement table 3 moves horizontally, but the processing head 1 and the recording head 2 may move horizontally while the placement table 3 being fixed. Alternatively, the placement table 3 may move horizontally in the conveyance direction of the recording object P, or the processing head 1 and the recording head 2 may move horizontally in the conveyance direction of the recording object P, while the processing head 1 and the recording head 2 may move horizontally in a direction orthogonal to the conveyance direction of the recording object P.

That is, as long as the inkjet recording apparatus includes the processing head 1 and the recording head 2, the effect derived from the use of the treatment liquid of the present embodiment can be obtained regardless of the mode of the inkjet recording apparatus.

[INK]

An ink to be used for inkjet recording, together with the treatment liquid of the present embodiment, is not particularly limited, but for example, an ink containing a pigment and an aqueous medium can be used. The ink may further contain at least one selected from the group consisting of a surfactant, a polyol, and binder resin particles, if necessary.

As the pigment, a dispersible pigment dispersed in an aqueous medium can be used, for example. From a point of view of obtaining an ink excellent in image density, hue, and color stability, the volume median diameter ($D_{50}$) of the pigment is preferably 30 nm or more and 250 nm or less, and more preferably 70 nm or more and 160 nm or less. Note that as used herein, the measured value of the volume median diameter ($D_{50}$) is a median diameter measured with a laser diffraction/scattering particle size distribution analyzer ("LA-950" available from HORIBA, Ltd.).

Examples of the pigment include a yellow pigment, an orange pigment, a red pigment, a blue pigment, a purple pigment, and a black pigment. Examples of the yellow pigment include C.I.Pigment Yellow (74, 93, 95, 109, 110, 120, 128, 138, 139, 151, 154, 155, 173, 180, 185, and 193). Examples of the orange pigment include C.I.Pigment Orange (34, 36, 43, 61, 63, and 71). Examples of the red pigment include C.I.Pigment Red (122 and 202). Examples of the blue pigment include C.I.Pigment Blue (15, more specifically 15:3). Examples of the violet pigment include C.I.Pigment Violet (19, 23, and 33). Examples of the black pigment include C.I.Pigment Black (7).

The content ratio of the pigment is preferably 1 wt% or more and 12 wt% or less, and more preferably 1 wt% or more and 7 wt% or less based on the total weight of the ink. When the content ratio of the pigment is 1 wt% or more, the image density of a recorded matter to be formed can be improved. When the content ratio of the pigment is equal to or less than 12 wt%, an ink having high fluidity is obtained.

In particular, the ink of the present embodiment preferably contains an anionic pigment. Thus, the cationic polymer contained in the above-described treatment liquid and the anionic pigment electrically cause reactive aggregation on the surface of the recording object, so that a binding resin (a binder resin described later) contained in the ink can be suppressed from penetrating into the recording medium. This can reduce the possibility that the binding resin penetrates into the gaps between the fibers and binds the fibers to each other when the recording medium is a fabric. Thus, the texture (such as feeling) of the fabric of the textile to be printed can be improved.

Specifically, the anionic pigment is more preferably an anionic pigment containing an anionic group such as a carboxyl group, a sulfonic acid group, a phosphoric acid group, a phosphonic acid group, a phenylsulfonic acid group, or a phenyl carboxyl group.

In the present embodiment, the aqueous medium contained in the ink is a medium containing water as a main component. The aqueous medium may function as a solvent, or may function as a dispersion medium. Specific examples of the aqueous medium include water and a mixed liquid of water and a polar solvent. Examples of the polar solvent contained in the aqueous medium include methanol, ethanol, isopropyl alcohol, butanol, and methyl ethyl ketone. The content ratio of the water in the aqueous medium is preferably 90 wt% or more, and particularly preferably 100 wt%. The content ratio of the aqueous medium is preferably 5 wt% or more and 70 wt% or less, and more preferably 40 wt% or more and 60 wt% or less based on the total weight of the ink.

When the ink contains a surfactant, the ink has an enhanced wettability against a recording object. Examples of the surfactant include anionic surfactants, cationic surfactants, nonionic surfactants, and amphoteric surfactants. The surfactant contained in the ink is preferably a nonionic surfactant. The nonionic surfactant is preferably a surfactant having an acetylene glycol structure, and more preferably an acetylene diol ethylene oxide adduct. The HLB value of the surfactant is preferably 3 or more and 20 or less, more preferably 6 or more and 16 or less, and still more preferably 7 or more and 10 or less. The HLB value of the surfactant is calculated by, for example, the Griffin method from the equation "HLB value = 20 × (sum of formula weights of hydrophilic portions)/molecular weight". In order to improve the image density while suppressing the image offset, the content ratio of the surfactant is preferably 0.1 wt% or more and 5.0 wt% or less, and more preferably 0.5 wt% or more and 2.0 wt% or less based on the weight of the entire ink.

When the ink contains a polyol, the viscosity of the ink is suitably adjusted. The polyol contained in the ink is preferably a diol or a triol. Examples of the diol include glycol compounds, and more specific examples thereof include ethylene glycol, propylene glycol, diethylene glycol, triethylene glycol, and tetraethylene glycol. Examples of the triol include glycerin.

When the ink contains a polyol, in order to suitably adjust the viscosity of the ink, the content ratio of the polyol is preferably 5 wt% or more and 60 wt% or less, and more preferably 20 wt% or more and 50 wt% or less based on the weight of the entire ink.

In the present embodiment, the binder resin particles contained in the ink are present in a state of being dispersed in an aqueous medium. The binder resin particles function as a binder that combines a pigment with a textile to be printed. Accordingly, when the ink contains the binder resin particles, a printed textile excellent in pigment fixation can be obtained.

Examples of the resin contained in the binder resin particles include a urethane resin, a (meth)acrylic resin, a styrene-(meth)acrylic resin, a styrene-maleic acid copolymer, a vinylnaphthalene-(meth)acrylic acid copolymer, and a vinylnaphthalene-maleic acid copolymer. The resin contained in the binder resin particles is preferably a urethane resin. The content ratio of the urethane resin in the binder resin particles is preferably 80 wt% or more, and more preferably 100 wt%.

The content ratio of the binder resin is preferably 1 wt% or more and 20 wt% or less, and more preferably 2 wt% or more and 10 wt% or less based on the weight of the entire ink. When the content ratio of the binder resin particles is 1 wt% or more, a recording object excellent in pigment fixation can be obtained. On the other hand, when the content ratio of the binder resin particles is equal to or less than 20 wt%, the ink can be stably ejected onto the recording object.

In the present embodiment, the ink may further contain a known additive (more specific examples thereof include a dissolution stabilizer, an anti-drying agent, an antioxidant, a viscosity modifier, a pH modifier, and an antifungal agent) as necessary.

The ink used in the present embodiment is produced by using a stirrer, for example, to mix a pigment, an aqueous medium, and components to be added as necessary (such as a surfactant, a polyol, and binder resin particles). The mixing time is, for example, 1 minute or longer and not longer than 30 minutes.

[INK SET]

The present embodiment also includes an ink set including: the treatment liquid for inkjet printing; and an inkjet ink.

The inkjet ink is preferably an ink containing an anionic pigment, and more preferably an ink containing an anionic pigment and a binder resin.

In particular, when used for textile printing, the ink set of the present embodiment provides an excellent effect of improving the texture of a textile to be printed, and thus the ink set is preferably an ink set for textile printing.

[TEXTILE PRINTING METHOD]

The present embodiment also includes a textile printing method using the treatment liquid for inkjet printing and the inkjet ink.

When using a pigment ink capable of printing for many types of fabrics, the pigment needs to be fixed on the fabric surface. A pigment that cannot be fixed onto the fabric surface is poor in color fastness to rubbing. On the other hand, when the pigment and the binder resin do not stay on the fabric surface and penetrate deeply into the fabric, not only the color developability is poor, but also the ink and the binder resin enter between the fibers, which causes a problem that the fabric becomes stiff to the touch, that is, the texture deteriorates.

According to the textile printing method of the present embodiment, the above-described issue can be improved by using the above-described treatment liquid.

A specific method can be substantially the same as the recording method described in [INKJET RECORDING METHOD USING TREATMENT LIQUID] described above, except that the recording object is changed to the textile to be printed. Examples of the textile to be printed include all fabrics, and specifically, a woven fabric, a knitted fabric, or a nonwoven fabric may be subjected to the textile printing. Examples thereof include cotton fabric, silk fabric, hemp fabric, acetate fabric, rayon fabric, nylon fabric, polyurethane fabric, and polyester fabric.

As the inkjet ink to be used for textile printing, among the above-described inks, an ink containing an anionic pigment is preferably used, and an ink containing an anionic pigment and a binder resin is further preferably used.

The textile printing method of the present embodiment can provide an excellent color developability while suppressing the corrosion of the inkjet head member and the yellowing of the textile to be printed, and further can suppress the deterioration of the texture of the fabric of the textile to be printed, and thus is very useful for industrial use.

In the present embodiment, the treatment liquid does not require labor such as padding and drying the fabric in advance, and can be placed on the fabric by the inkjet system, thereby also providing an advantage of greatly reducing the labor of adjusting the fabric.

[RECORDING APPARATUS]

The recording apparatus 10 illustrated in FIG. 1 will be described in detail. Hereinafter, as a specific example of the recording apparatus, an inkjet printer including an ink head configured to eject ink for image formation onto a wide and long recording medium will be exemplified. The inkjet printer is suitable for digital textile printing in which an inkjet system is used to print an image of characters, patterns, and the like onto a recording medium made of fabric such as woven fabric and knitted fabric. As a matter of course, the recording apparatus according to the present disclosure can also be used in an application for printing various images onto a recording medium such as a paper sheet or a resin sheet.

• OVERALL CONFIGURATION OF INKJET PRINTER

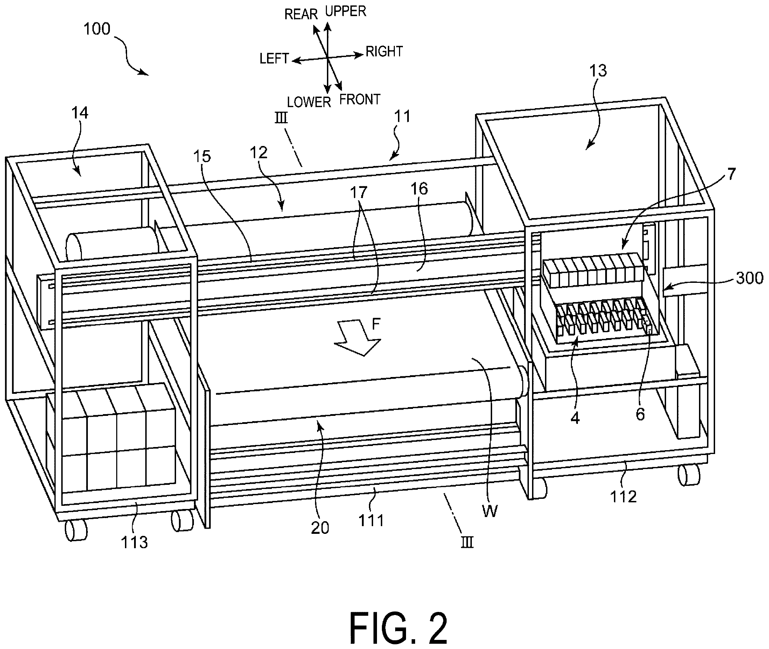

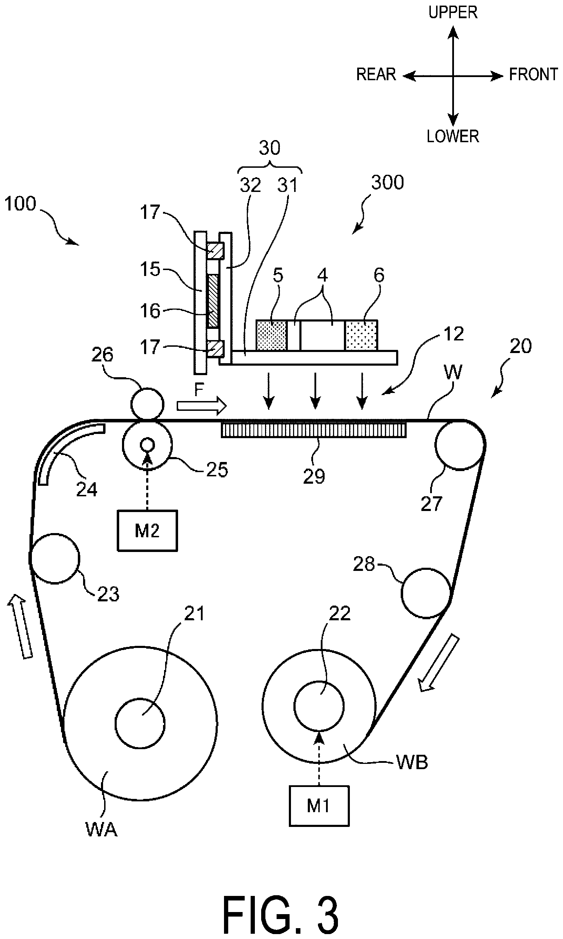

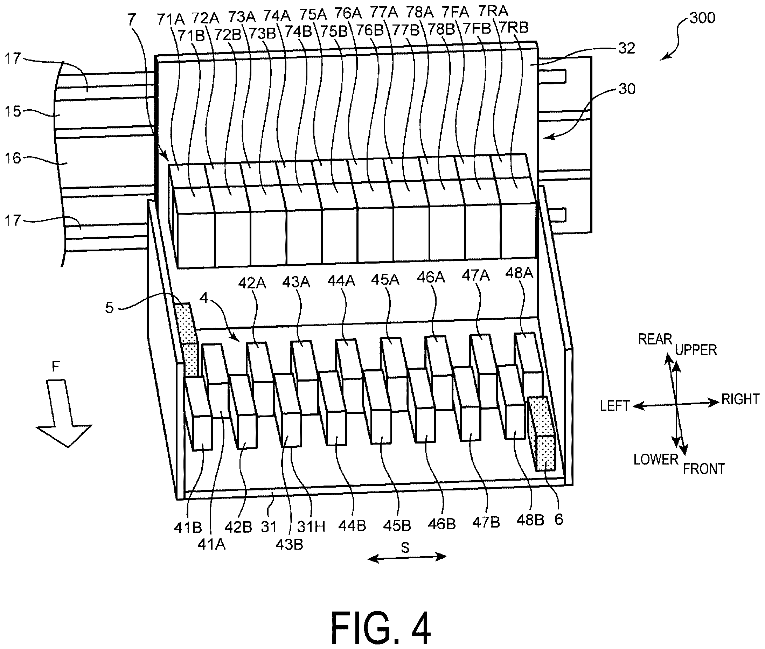

FIG. 2 is a perspective view illustrating an overall configuration of an inkjet printer 100 according to a first embodiment of the present disclosure, and FIG. 3 is a schematic cross-sectional view taken along line III-III of FIG. 2. The inkjet printer 100 is a printer based on an inkjet system through which an image is printed on a wide and long workpiece W (recording medium). By way of an example, the workpiece W is several meters in width. The printer 100 includes: a device frame 11; and a workpiece conveyor 20 and a carriage 300 incorporated in the device frame 11. Note that, in the present embodiment, the left-right direction is the main scanning direction S (FIG. 4) at the time of printing on the workpiece W, and the direction from rear to front is the sub-scanning direction (the conveyance direction F of the workpiece W, which is a direction intersecting the main scanning direction S).

The device frame 11 forms a frame for mounting various component members of the inkjet printer 100. The workpiece conveyor 20 is a mechanism that intermittently feeds (conveys) the workpiece W in a manner that the workpiece W moves in the conveyance direction F from rear to front in the printing area on which the inkjet printing process is performed. The carriage 300 is equipped with an ink head 4, a pre-treatment liquid head 5, a post-treatment liquid head 6, and a subtank 7, and moves back and forth in the main scanning direction S (left-right direction) intersecting the conveyance direction F of the workpiece W during the inkjet printing process.

The device frame 11 includes a center frame 111, a right frame 112, and a left frame 113. The center frame 111 forms a frame for mounting various component members of the inkjet printer 100, and has a lateral width corresponding to the workpiece conveyor 20. The right frame 112 and the left frame 113 are located on the right and left sides of the center frame 111, respectively. In between the right frame 112 and the left frame 113 is a printing area 12 where the printing process is performed onto the workpiece W.

The right frame 112 forms a maintenance area 13. The maintenance area 13 is an area into which the carriage 300 is retracted when the printing process is not performed. In the maintenance area 13, cleaning processing, purge processing, and the like of nozzles (ejection holes) of the ink head 4, the pre-treatment liquid head 5, and the post-treatment liquid head 6 are performed, and a cap is fitted. The left frame 113 forms a turnaround area 14 of the carriage 300. The turnaround area 14 is an area into which the carriage 300 temporarily enters after having performed the main scanning of the printing area 12 from right to left in the printing process, and to perform the main scanning in the reverse direction.

A carriage guide 15 configured to move the carriage 300 back and forth in the left-right direction is assembled on the upper side of the device frame 11. The carriage guide 15 is a flat plate member elongated in the left-right direction, and is disposed above the workpiece conveyor 20. To the carriage guide 15 is attached a timing belt 16 so as to be rotationally movable in the left-right direction (main scanning direction). The timing belt 16 is an endless belt, and is driven to rotationally move in the left direction or the right direction.

To the carriage guide 15 is provided a pair of upper and lower guide rails 17 extending in parallel in the left-right direction, the guide rails are configured to hold the carriage 300 so as to be movable back and forth in the main scanning direction S. The carriage 300 is engaged with the guide rail 17. The carriage 300 is fixed to the timing belt 16. The carriage 300 moves in the left direction or the right direction along the carriage guide 15 while being guided by the guide rail 17 along with the rotational movement of the timing belt 16 in the left direction or the right direction.

Referring mainly to FIG. 3, the workpiece conveyor 20 includes a feed roller 21 that sends out the workpiece W before printing and a winding roller 22 that winds up the workpiece W after printing. The feed roller 21 is disposed at a lower rear portion of the device frame 11 and is a winding shaft of a delivery roll WA which is a wound body of the workpiece W before printing. The winding roller 22 is disposed at a lower front portion of the device frame 11, and is a winding shaft of a wound roll WB which is a wound body of the workpiece W underwent the printing process. To the winding roller 22 is attached a first motor M1 configured to rotationally drive the winding roller 22 around an axis and thereby performing an operation of winding up the workpiece W.

A path lying between the feed roller 21 and the winding roller 22 and passing through the printing area 12 is a conveyance path of the workpiece W. In this conveyance path, a first tension roller 23, a workpiece guide 24, a conveyance roller 25 and a pinch roller 26, a turnround roller 27, and a second tension roller 28 are disposed in this order from the upstream side. The first tension roller 23 applies a predetermined tension to the workpiece W on the upstream side of the conveyance roller 25. The workpiece guide 24 changes the conveyance direction of the workpiece W from the upward direction to the front direction and carries the workpiece W into the printing area 12.

The conveyance roller 25 is a roller configured to generates a conveying force to intermittently feed the workpiece W in the printing area 12. The conveyance roller 25 is rotationally driven about an axis by the second motor M2, and intermittently conveys the workpiece W in the front direction (predetermined conveyance direction F) so that the workpiece W passes through the printing area 12 (image forming position) facing the carriage 300. The pinch roller 26 is disposed so as to face the conveyance roller 25 from above, and together with the conveyance roller 25 forms a conveyance nip portion.

The turnround roller 27 is configured to change the conveyance direction of the workpiece W that has passed through the printing area 12 from the front direction to the downward direction, and guides the workpiece W after the printing process to the winding roller 22. The second tension roller 28 applies a predetermined tension to the workpiece W on the downstream side of the conveyance roller 25. A platen 29 is disposed below the conveyance path of the workpiece W in the printing area 12.

The carriage 300, with being supported in a cantilever manner by the guide rails 17, moves back and forth in the main scanning direction S (the left-right direction in the present embodiment) intersecting (orthogonal to, in the present embodiment) the conveyance direction F. The carriage 300 includes: a carriage frame 30; and an ink head 4, a pre-treatment liquid head 5, a post-treatment liquid head 6, and a subtank 7 (FIG. 4), which are mounted on the carriage frame 30. The carriage frame 30 includes a head support frame 31 and a back frame 32.

The head support frame 31 is a horizontal plate holding the above-described heads 4 to 6. The back frame 32 is a vertical plate extending upward from a rear end edge of the head support frame 31. As described above, the timing belt 16 is fixed to the back frame 32. The guide rails 17 are engaged with the back frame 32. That is, in the present embodiment, the back frame 32 is an engaging portion which is held in a cantilever manner by the guide rails 17. The head support frame 31 is a horizontal plate supported only on the rear end side thereof by the guide rails 17 at the engaging portion.

Note that the cantilever manner refers to a state where, in the carriage 300, an engaging portion (back frame 32), which is a portion held by the guide rails 17 as a holding member, exists only on one side of the upstream side or the downstream side from the center of the carriage 300 in the conveyance direction F, and no other engaging portion exists on the opposite side of the side where the engaging portion exists. The engaging portion may be disposed outside the range where the ink head 4 and the processing head are disposed in the conveyance direction F. That is, in the conveyance direction F, the engaging portion may be disposed only on the upstream side or only on the downstream side of the range in which the ink head 4 and the processing head are disposed.

• DETAILS OF CARRIAGE

The carriage 300 will be further described. FIG. 4 is an enlarged perspective view of the carriage 300 illustrated in FIG. 2. FIG. 4 illustrates a conveyance direction F (sub-scanning direction) of the workpiece W and a main scanning direction S which is a moving direction of the carriage 300. FIG. 4 illustrates an example in which a plurality of ink heads 4 configured to eject inks for image formation onto the workpiece W, a pre-treatment liquid head 5 and a post-treatment liquid head 6 configured to eject non-chromogenic treatment liquids, and a plurality of subtanks 7 configured to supply the inks and the treatment liquids to these heads 4 to 6 are mounted on the carriage 300.

Each of the ink heads 4 includes: a large number of nozzles (ink ejection holes) configured to eject ink droplets by an ejection system such as a piezo inkjet system using a piezoelectric element or a thermal inkjet system using a heating element or the like; and an ink passage configured to guide the ink to the nozzles. As the ink, for example, the ink as described above can be used. In the present embodiment, the plurality of ink heads 4 can eject inks of eight colors. The ink heads 4 are mounted on the head support frame 31 of the carriage 300 and are arranged in two rows in the main scanning direction S. The ink head 4 for each color has two heads.

Specifically, the ink head 4 includes a first upstream ink head 41A and a first downstream ink head 41B. These ink heads 4 are configured to eject yellow ink. The ink head 4 also includes a second upstream ink head 42A and a second downstream ink head 42B. These ink heads 4 are configured to eject magenta ink. In the same way and/or a similar way, as illustrated in FIG. 4, two ink heads 4 configured to eject ink of the same color are arranged at positions shifted from each other in the conveyance direction F and in the main scanning direction S. Using these two ink heads 4 as one set, a total of eight sets of ink heads 4 (41A to 48A, 41B to 48B) are configured to eject inks of colors different from each other.

The pre-treatment liquid head 5 and the post-treatment liquid head 6 are disposed at positions different from the ink heads 4 in the conveyance direction F. The pre-treatment liquid head 5 is disposed on the upstream side of the ink head 4 in the conveyance direction F. FIG. 4 illustrates an example in which one pre-treatment liquid head 5 is disposed in the vicinity of the left end portion of the array of ink heads 4. In the same way and/or a similar way, the post-treatment liquid head 6 is disposed on the downstream side of the ink head 4 in the conveyance direction F. FIG. 4 illustrates an example in which one post-treatment liquid head 6 is disposed at the right end portion of the array of ink heads 4. In another embodiment, a plurality of pre-treatment liquid heads 5 or a plurality of post-treatment liquid heads 6 may be disposed. The carriage 300 desirably includes at least one pre-treatment liquid head 5 and at least one post-treatment liquid head 6, but in another embodiment, the pre-treatment liquid head 5 and the post-treatment liquid head 6 need not be disposed.

Note that, a series of heads including the ink heads 4, the pre-treatment liquid head 5 and the post-treatment liquid head 6 and lying along the main scanning direction S is referred to as a column of heads, or simply as a column. A series of heads including the ink heads 4, the pre-treatment liquid head 5, and the post-treatment liquid head 6 and lying along the conveyance direction F is referred to as a row of heads, or simply as a row.

The pre-treatment liquid head 5 is configured to eject a pre-treatment liquid for subjecting the workpiece W to a predetermined pre-processing. The pre-treatment liquid is ejected from the pre-treatment liquid head 5 onto a position of the workpiece W onto which ink from the ink head 4 has not yet been ejected from the ink head 4. As the pre-treatment liquid, the treatment liquid of the present embodiment is used. This makes it possible to suppress the yellowing of the treatment liquid or of the components in the treatment liquid. Since yellowing of the recording medium can be suppressed, for example, when the apparatus of the present embodiment is used for textile printing, yellowing of fabric of the textile to be printed or the like can be suppressed.

The post-treatment liquid head 6 is configured to eject a post-treatment liquid for performing predetermined post-processing on the workpiece W having the ink attached thereon. The post-treatment liquid is ejected from the post-treatment liquid head 6 onto a position of the workpiece W onto which the ink has been ejected from the ink head 4. The post-treatment liquid is a non-chromogenic treatment liquid that does not develop color even if it adheres onto the workpiece W in the same and/or a similar manner, and is a treatment liquid that exhibits a function of enhancing fixability and fastness (resistance to rubbing and scraping) of the ink image that the ink head 4 has printed on the workpiece W. As such a post-treatment liquid, a silicone-based treatment liquid or the like can be used. Note that the post-treatment liquid is a treatment liquid different from the pre-treatment liquid. Specifically, the post-treatment liquid and the pre-treatment liquid are different from each other in the contained components.

Here, the non-chromogenic treatment liquid refers to treatment liquid, when singly printed on a recording medium, the color development thereof is imperceptible to the unaided human eye. Here, the color includes a color having a chroma of 0, such as black, white, and gray, as well. The non-chromogenic treatment liquid is basically a transparent liquid, but when one liter of the treatment liquid is viewed in liquid state, for example, the non-chromogenic treatment liquid may look slightly white not completely transparent. Such color is so light that people cannot recognize with the naked eye that the color has come out when the liquid is singly printed on a recording medium. Note that, depending on the type of treatment liquid, a change such as glossy appearance may be produced on a recording medium when the treatment liquid is singly printed on the recording medium, but such state is not included in the color development.

In the present embodiment, the pre-treatment liquid and the post-treatment liquid may be ejected onto substantially the entire surface of the workpiece W, or the pre-treatment liquid and the post-treatment liquid, same as, and/or similar to the ink, may be selectively ejected to match an image to be printed.

Subsequently, a selective ejection of the pre-treatment liquid and the post-treatment liquid will be described. As described above, the pre-treatment liquid, the ink, and the post-treatment liquid are ejected in this order onto a portion of the workpiece W where colors are printed to match an image. In this case, the ink may be of single color or of multiple colors. Basically, neither the pre-treatment liquid nor the post-treatment liquid is ejected onto a portion without color printing, that is, a portion onto which no ink is ejected. Note that, in order to adjust the image quality of the image to be printed, the texture of the workpiece W, and/or the like, a part of the selection of the ejection of the pre-treatment liquid and of the post-treatment liquid may be changed from that of the ink ejection.

As illustrated in FIG. 4, an opening 31H is provided at a position where the head of the head support frame 31 is disposed. The ink head 4, the pre-treatment liquid head 5, and the post-treatment liquid head 6 are assembled to the head support frame 31 and each are fitted into a respective one of the openings 31H. From each of the opening 31H is exposed a respective nozzle disposed on each of the lower end surfaces of the heads 4, 5, and 6.

A plurality of subtanks 7 are supported through a holding frame (not illustrated) by the carriage 300 on the upper side of the heads 4, 5, and 6. Each of the plurality of subtanks 7 is provided corresponding to a respective one of the heads 4, 5, and 6. To each of the subtanks 7 is supplied the ink or the treatment liquid from an undermentioned main tank 90 in which the ink and the treatment liquid are stored, and each of the subtanks 7 supplies the ink or the treatment liquid to a respective one of the heads 4, 5, and 6. Each of the subtanks 7 is connected to a respective one of the heads 4, 5, and 6 through a conduit (not illustrated) in FIG. 4.

Specifically, the plurality of subtanks 7 include a first supply subtank 71A to an eighth supply subtank 78A, a pre-processing supply subtank 7FA, and a post-processing supply subtank 7RA, which are disposed on the rear side and arranged along the main scanning direction S. The plurality of subtanks 7 further include a first collection subtank 71B to an eighth collection subtank 78B, a pre-processing collection subtank 7FB, and a post-processing collection subtank 7RB, which are disposed on the front side and arranged along the main scanning direction S.

The first supply subtank 71A and the first collection subtank 71B, which are located on the leftmost side of the carriage 300, store yellow ink containing a pigment. The first supply subtank 71A feeds the yellow ink to the first upstream ink head 41A and the first downstream ink head 41B (both are also referred to as supply destinations). On the other hand, the first collection subtank 71B stores the yellow ink collected from the first upstream ink head 41A and the first downstream ink head 41B. Note that, as described above, a part of yellow ink is ejected through the first upstream ink head 41A and the first downstream ink head 41B toward the workpiece W. In the same way and/or a similar way, the second supply subtank 72A feeds magenta ink to the second upstream ink head 42A and the second downstream ink head 42B. On the other hand, the second collection subtank 72B stores the magenta ink collected from the second upstream ink head 42A and the second downstream ink head 42B. The other subtanks of from the third to the eighth subtanks each also have structure and function same as, and/or similar to those described above.

The pre-processing supply subtank 7FA feeds the pre-treatment liquid to the pre-treatment liquid head 5, and the pre-processing collection subtank 7FB collects the pre-treatment liquid from the pre-treatment liquid head 5. The post-processing supply subtank 7RA feeds the post-treatment liquid to the post-treatment liquid head 6, and the post-processing collection subtank 7RB collects the post-treatment liquid from the post-treatment liquid head 6.

As described above, in the present embodiment, the inkjet printer 100 is an all-in-one printer in which three types of heads of the ink head 4, the pre-treatment liquid head 5, and the post-treatment liquid head 6 are mounted on one carriage 300. According to the inkjet printer 100, for example, in the printing process of performing inkjet printing on a fabric in digital textile printing, the process of ejecting the pre-treatment liquid and the process of ejecting the post-treatment liquid can be performed in an integrated fashion. Therefore, the textile printing process can be simplified, and the textile printing apparatus can be made compact.

Note that, in the present embodiment, the inkjet printer 100 is based on a serial printing system to perform a printing process on the workpiece W. Specifically, when the workpiece W has a size of large in width, the printing cannot be done while continuously feeding this workpiece W. The serial printing system is a printing system in which the carriage 300 having the ink heads 4 of the respective colors mounted thereon repeat reciprocating movement in the main scanning direction S and intermittent feeding in the conveyance direction F of the workpiece W.

Specifically, a strip image is printed while the carriage 300 moves in the forward direction which is one direction of the main scanning direction S. During the main scanning in the forward direction, the feeding of the workpiece W is stopped. After the strip image has been printed, the workpiece W is fed in the conveyance direction F by a predetermined pitch. At this time, the carriage 300 waits in the turnaround area 14 on the left end side. After the feeding of the workpiece W, the carriage 300 turns back in the backward direction opposite to the forward direction along with the reverse movement of the timing belt 16. The workpiece W is in a stopped state. Then, the carriage 300 prints the next strip image on the upstream side of the strip image while moving the carriage 300 in the backward direction. Thereafter, the same and/or similar operation is repeated.

EXAMPLES

Hereinafter, the present disclosure will be described more specifically with reference to examples, but the present disclosure is not limited to these examples.

(EXAMPLE 1)

• ADJUSTMENT OF CATIONIC POLYMERS

A column was filled with 0.5 L of a strongly basic ion exchange resin (OH type), and 1 L of "PAS-A5" (available from Nittobo Medical Co., Ltd.) was allowed to pass through the column at a flow rate of 50 ml/min to give an adjusted cationic polymer liquid 1. PAS-A5 is a cationic polymer of a quaternary ammonium salt (diallyldimethylammonium chloride-sulfur dioxide copolymer). The resulting adjusted cationic polymer liquid 1 was found to have a solid content of 40%.

• PREPARATION OF TREATMENT LIQUID

3 parts by weight (solid content) of the adjusted cationic polymer liquid 1 obtained above, 2 parts by weight of succinic acid, 1 part by weight of a nonionic surfactant "SURFYNOL 440" (available from Nissin Chemical Industry Co., Ltd.), 10 parts by weight of propylene glycol, and the balance water were mixed, and then the mixture was filtered through a 5 μm filter to afford a treatment liquid 1 (pH: 8.0, chloride ion concentration: 4.5 g/L).

(EXAMPLE 2)

A treatment liquid 2 (pH: 7.9, chloride ion concentration: 1.0 g/L) was obtained in a manner same as, and/or similar to Example 1 except that the amount of the adjusted cationic polymer liquid 1 in Example 1 was changed from 3 parts by weight to 0.5 parts by weight.

(EXAMPLE 3)

A treatment liquid 3 was obtained in a manner same as, and/or similar to Example 1 except that the amount of succinic acid in Example 1 was changed from 2 parts by weight to 1 part by weight (pH: 7.9, chloride ion concentration: 3.5 g/L).

(EXAMPLE 4)

• ADJUSTMENT OF CATIONIC POLYMERS

The adjusted cationic polymer liquid 1 obtained in Example 1 was allowed to pass through a column again at a flow rate of 50 ml/min to give an adjusted cationic polymer liquid 2. The resulting adjusted cationic polymer liquid 2 was found to have a solid content of 40%.

• PREPARATION OF TREATMENT LIQUID

A treatment liquid 8 was obtained in a manner same as, and/or similar to Example 1 except that 30 parts by weight (solid content) of the adjusted cationic polymer liquid 2 obtained above was used in place of the adjusted cationic polymer liquid 1 and the amount of succinic acid was changed to 18 parts by weight (pH: 8.9, chloride ion concentration: 4.5 g/L).

(COMPARATIVE EXAMPLE 1)

3 parts by weight (solid content) of "PAS-A5" (available from Nittobo Medical Co., Ltd.), 1% of 1N sodium hydroxide, 1 part by weight of a nonionic surfactant "SURFYNOL 440" (available from Nissin Chemical Industry Co., Ltd.), 10 parts by weight of propylene glycol and the balance water were mixed, and then the mixture was filtered through a 5 μm filter to give a treatment liquid 8 (pH: 7.3, chloride ion concentration: 5.6 g/L).

(COMPARATIVE EXAMPLE 2)

3 parts by weight (solid content) of the adjusted cationic polymer liquid 1, 0.5 parts by weight of lactic acid, 1 part by weight of a nonionic surfactant "SURFYNOL 440" (available from Nissin Chemical Industry Co., Ltd.), 10 parts by weight of propylene glycol, and the balance water were mixed, and then the mixture was filtered through a 5 μm filter to give a treatment liquid 9 (pH: 10.0, chloride ion concentration: 4.6 g/L).

(COMPARATIVE EXAMPLE 3)

3 parts by weight (solid content) of the adjusted cationic polymer liquid 1, 1 part by weight of a nonionic surfactant "SURFYNOL 440" (available from Nissin Chemical Industry Co., Ltd.), 10 parts by weight of propylene glycol and the balance water were mixed, and the mixture was filtered through a 5 μm filter to give a treatment liquid 10 (pH: 10.9, chloride ion concentration: 4.6 g/L).

(COMPARATIVE EXAMPLE 5)

3 parts by weight (solid content) of the adjusted cationic polymer liquid 1, 0.8 parts by weight of acetic acid, 1 part by weight of a nonionic surfactant "SURFYNOL 440" (available from Nissin Chemical Industry Co., Ltd.), 10 parts by weight of propylene glycol, and the balance water were mixed, and the mixture was then filtered through a 5 μm filter to give a treatment liquid 11. (pH: 8.4, chloride ion concentration: 4.6 g/L).

(COMPARATIVE EXAMPLE 6)

3 parts by weight (solid content) of the adjusted cationic polymer liquid 1, 0.5 parts by weight of succinic acid, 1 part by weight of a nonionic surfactant "SURFYNOL 440" (available from Nissin Chemical Industry Co., Ltd.), 10 parts by weight of propylene glycol, and the balance water were mixed, and the mixture was then filtered through a 5 μm filter to give a treatment liquid 9 (pH: 10.2, chloride ion concentration: 4.6 g/L).

(PREPARATION OF INK)

An anionic pigment dispersion "AE-2078F" (available from SANYO COLOR WORKS, Ltd.) having a pigment concentration of 20%, a urethane dispersion "SuperFlex 470" (available from DKS Co., Ltd.) having a solid content of 38%, a nonionic surfactant "SURFYNOL 440" (available from Nissin Chemical Industry Co., Ltd.), propylene glycol, and water were used to prepare an ink.
Specific formulation of the ink was as follows: 4 wt% of the pigment; 8 wt% of urethane; 30 wt% of propylene glycol; 1 wt% of the surfactant; and the balance of water. After mixing the components at the ratios set forth above, the mixture was filtered through a 5 μm filter to afford the ink.

(PREPARATION OF POST-TREATMENT LIQUID)

An emulsion "POLON-MF-51" (available from Shin-Etsu Chemical Co., Ltd.) of silicone oil having a silicone oil content ratio of 39%, propylene glycol, and water were used to prepare a post-treatment liquid. Specific formulation was as follows: 10 wt% of the silicone oil; 30 wt% of propylene glycol; and the balance of water. After mixing the components at the ratios set forth above, the mixture was filtered through a 5 μm filter to afford the post-treatment liquid.

<PRINTING>

For inkjet printing, a flatbed printing jig in which KJ4B heads available from KYOCERA Corporation were arranged in a conveyance direction was used. The pre-treatment liquid was fed into the first head, the ink was fed into the second head, and the post-treatment liquid was fed into the third head, and inkjet printing was performed under the following conditions. Note that only in Comparative Example 4 printing was conducted without the pre-treatment liquid.

Fabric used: polyester tropical
Fabric/head distance: 3 mm, head temperature: 25°C
Drying: 150°C for 3 minutes (in oven)

<EVALUATION TEST>

(IMAGE DENSITY)

The color measurement was conducted with a fluorescence spectrodensitometer FD-5 (available from KONICA MINOLTA, INC.). The evaluation criteria were as follows. Image density (OD): 1.3 or more "Excellent" Color developability is very good. Image density (OD): 1.25 or more and less than 1.3 "Good" Color developability is good. Image density (OD): less than 1.25 "Poor" Color developability is poor.

(YELLOWING OF FABRIC)

A fluorescence spectrodensitometer FD-5 (available from KONICA MINOLTA, INC.) was used to measure the concentration of the fabric itself and the concentration (Yellow) of the site on which the pre-treatment liquid was placed, and the difference between the two was defined as ΔOD. The evaluation criteria were as follows.

ΔOD: less than 0.05 "Excellent" Yellowing was not found in visual inspection and rated as very good.

ΔOD: 0.05 or more and less than 0.10 "Good" Yellowing was slight and rated as good.
ΔOD: 0.10 or more "Poor" Yellowing was found.

(TEXTURE)

An unused textile to be printed was folded in two along the warp (in the length direction), and the distance (loop height) between the lower fabric and the upper fabric in the fold line was measured. The measured loop height of the unused textile to be printed was defined as the loop height before textile printing. Subsequently, an area of the printed textile for evaluation where a solid image was created was folded in two along the warp (in the length direction), and the loop height was measured. The measured loop height of the printed textile for evaluation was defined as the loop height after printing. The percentage of change in loop height (unit: %) before and after textile printing was calculated according to an equation "Percentage of change in loop height = 100 × loop height after printing/loop height before printing". When the percentage of change in loop height is lower, the textile to be printed does not feel stiff and does not swell even after textile printing, which thus indicates that the decrease in the sense of touch of the printed textile is suppressed. The evaluation criteria were set forth below.

Less than 130%: "Good" Change in texture is small and rated as good.
130% or more: "Poor" The texture is changed to be stiff and rated as poor.

(CORROSION OF METAL MEMBER)

About 0.1 g of a piece of stainless steel (SUS430) is weighed accurately, and then immersed in 50 g of the treatment liquid weighed in a 50 ml glass bottle, the glass bottle is capped, and left at 60°C for one month. After one month, the piece of stainless steel (SUS430) was taken out, washed with ion exchanged water and dried, and the weight of the piece was measured. The ratio of weight variation was calculated by the following equation.

$$\text{Weight after storage/weight before storage} \times 100 = \text{Ratio of weight variation (\%).}$$

The evaluation criteria were set forth below.
Ratio of weight variation (%): 98-100% "Good" No corrosion and the weight variation is very small.
Ratio of weight variation (%): less than 98% "Poor" Corrosion progresses and weight reduction is large.

The results of the above evaluation tests are summarized in Table 1.

[Table 1]

|  | Cationic polymer | Content (wt%) | Acid | Content (wt%) | Cationic polvmer/acid | pH | Halogen ion concentration (g/L) | Image density | Yellowing of fabric | Texture | Metal member |
|---|---|---|---|---|---|---|---|---|---|---|---|
| Example 1 | Quaternary ammonium salt | 3 | Succinic acid | 2 | 1.50 | 8.0 | 4.5 | 1.35 Ex-cellent | 0.02 Excel-lent | 115 | 99.8 Good |
| Example 2 | Quaternary ammonium salt | 0.5 | Succinic acid | 2 | 0.25 | 7.9 | 1.0 | 1.30 Excellent | 0 Excellent | 120 Good | 99.9 Good |
| Example 3 | Quaternary ammonium salt | 3 | Succinic acid | 1 | 3.00 | 7.3 | 3.5 | 1.34 Ex-cellent | 0.02 Excel-lent | 112 Good | 99.8 Good |
| Example 4 | Quaternary ammonium salt | 30 | Succinic acid | 18 | 1.67 | 8.9 | 4.5 | 1.44 Excellent | 0.08 Good | 107 Good | 99.8 Good |
| Comparative Example 1 | Quaternary ammonium salt | 3 | - | - | - | 7.3 | 5.6 | 1.36 Excellent | 0.08 Good | 110 Good | 91.0 Poor |
| Comparative Example 2 | Quaternary ammonium salt | 3 | Lactic acid | 0.5 | 6.00 | 10.0 | 4.6 | 1.35 Excellent | 0.15 Poor | 113 Good | 99.4 Good |
| Comparative Example 3 | Quaternary ammonium salt | 3 | - | - | - | 10.9 | 4.6 | 1.35 Excellent | 0.20 Poor | 114 Good | 99.4 Good |
| Comparative Example 4 | - | - | - | - | - | - | - | 1.10 Poor | 0 Excellent | 149 Poor | - |
| Comparative Example 5 | Quaternary ammonium salt | 3 | Acetic acid | 0.8 | 3.75 | 8.4 | 4.6 | 1.33 Excellent | 0.25 Poor | 111 Good | 98.9 Good |
| Comparative Example 6 | Quaternary ammonium salt | 3 | Succinic acid | 0.5 | 6.00 | 10.2 | 4.6 | 1.36 Excellent | 0.14 Poor | 111 Good | 99.1 Good |

EP 4 523 920 A1

(DISCUSSION)

From the results of Table 1, it was confirmed that the treatment liquid of the present disclosure is capable of suppressing the corrosion of the metal member. It was found that, when printing is performed by using the treatment liquid of the present disclosure, a printed material excellent in color developability (image density), capable of being suppressed from yellowing of the fabric, and also excellent in texture is obtained. In particular, the comparison between Examples 1 to 3 and Example 4 showed that yellowing of the fabric was further suppressed by reducing the amount of the cationic polymer.

On the other hand, the corrosion of the metal member occurred in Comparative Example 1 using the treatment liquid containing no succinic acid and having a halogen ion (chloride ion) concentration of more than 5 g/L. In Comparative Examples 2, 3, and 6 using the treatment liquid having a pH of more than 9, yellowing of the fabric occurred. Comparative Example 4 using no pre-treatment liquid had a result of decreased image density and also degraded texture. Yellowing occurred also in Comparative Example 5 using the treatment liquid in which acetic acid was used instead of succinic acid. As described above, Comparative Examples had poor results in the evaluation relative to those of Examples, but the implementation details of Comparative Examples themselves are not excluded or abandoned.

REFERENCE SIGNS

1 Processing head
2 Recording head
2a First recording head
2b Second recording head
2c Third recording head
2d Fourth recording head
3 Placement table
10 Inkjet recording apparatus
P Recording object

**Claims**

1. A treatment liquid for inkjet printing, comprising a cationic polymer and succinic acid, wherein a halogen ion concentration is equal to or less than 5 g/L, and a pH is from 7 to 9.5.

2. The treatment liquid for inkjet printing according to claim 1, wherein the cationic polymer comprises a cationic polymer containing a quaternary ammonium.

3. The treatment liquid for inkjet printing according to claim 1, wherein the cationic polymer is contained in an amount of 0.3 wt% or more and 35 wt% or less based on an entirety of the treatment liquid.

4. The treatment liquid for inkjet printing according to claim 1, wherein the succinic acid is contained in an amount of 0.5 wt% or more and 20 wt% or less based on an entirety of the treatment liquid.

5. The treatment liquid for inkjet printing according to claim 1, wherein a weight ratio of the cationic polymer to the succinic acid (cationic polymer/succinic acid) is 0.20 or more and 3.50 or less.

6. The treatment liquid for inkjet printing according to any one of claims 1 to 5, wherein the treatment liquid is used for textile printing.

7. The treatment liquid for inkjet printing according to claim 6, wherein the treatment liquid is used for textile printing using an inkjet ink containing an anionic pigment.

8. An ink set, comprising:

the treatment liquid for inkjet printing according to any one of claims 1 to 5; and
an inkjet ink containing an anionic pigment.

9. A textile printing method comprising:

   applying the treatment liquid for inkjet printing according to any one of claims 1 to 5 to a textile to be printed; and subsequently
   applying an inkjet ink containing an anionic pigment to an area onto which the treatment liquid for inkjet printing has been applied.

FIG. 1

FIG. 2

EP 4 523 920 A1

FIG. 3

FIG. 4

EP 4 523 920 A1

<table>
<tr><td colspan="2" align="center"><b>INTERNATIONAL SEARCH REPORT</b></td><td>International application No.<br><br><b>PCT/JP2023/021040</b></td></tr>
</table>

**A. CLASSIFICATION OF SUBJECT MATTER**

*B41M 5/00*(2006.01)i; *B41J 2/01*(2006.01)i; *C09D 11/54*(2014.01)i; *D06P 1/44*(2006.01)i; *D06P 5/30*(2006.01)i
FI: B41M5/00 132; C09D11/54; B41M5/00 114; B41M5/00 120; B41J2/01 501; B41J2/01 123; D06P5/30; D06P1/44 E

According to International Patent Classification (IPC) or to both national classification and IPC

**B. FIELDS SEARCHED**

Minimum documentation searched (classification system followed by classification symbols)

B41M5/00-5/52; B41J2/01; C09D11/54; D06P1/44; D06P5/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2006-152454 A (KONICA MINOLTA HOLDINGS INC.) 15 June 2006 (2006-06-15)<br>claims 1-4, paragraphs [0001], [0010], [0024], [0027]-[0029], [0031], [0040], examples | 1-9 |
| Y | JP 2019-26963 A (SEIKO EPSON CORP.) 21 February 2019 (2019-02-21)<br>claims 1-3, paragraphs [0008], [0056], examples 1-8 | 1-9 |
| Y | JP 2014-194106 A (SEIKO EPSON CORP.) 09 October 2014 (2014-10-09)<br>claims 1-2, paragraphs [0001], [0005], [0054], examples 1, 2 | 1-9 |
| Y | JP 2004-90456 A (RICOH CO., LTD.) 25 March 2004 (2004-03-25)<br>claims 1-3, 13, paragraphs [0010]-[0013], [0053], [0087], examples | 1-9 |
| Y | JP 10-237372 A (CANON INC.) 08 September 1998 (1998-09-08)<br>claims 1-5, 10-13, 21-22, paragraphs [0001], [0005], [0008]-[0011], [0028], examples | 1-9 |
| Y | JP 2011-251436 A (RICOH CO., LTD.) 15 December 2011 (2011-12-15)<br>claim 1, paragraphs [0001], [0004], [0014], [0018], examples | 1-9 |
| Y | JP 2014-176996 A (RICOH CO., LTD.) 25 September 2014 (2014-09-25)<br>claims 1-7, paragraphs [0013], [0023]-[0031], [0103], [0184], [0199], [0200], examples | 1-9 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br><br>**02 August 2023** | Date of mailing of the international search report<br><br>**15 August 2023** |
|---|---|
| Name and mailing address of the ISA/JP<br><br>**Japan Patent Office (ISA/JP)**<br>**3-4-3 Kasumigaseki, Chiyoda-ku, Tokyo 100-8915**<br>**Japan** | Authorized officer<br><br><br><br><br>Telephone No. |

Form PCT/ISA/210 (second sheet) (January 2015)

## INTERNATIONAL SEARCH REPORT

| International application No. |
| --- |
| **PCT/JP2023/021040** |

### C.   DOCUMENTS CONSIDERED TO BE RELEVANT

| Category* | Citation of document, with indication, where appropriate, of the relevant passages | Relevant to claim No. |
| --- | --- | --- |
| Y | JP 2006-342455 A (CANON ELECTRONICS INC.) 21 December 2006 (2006-12-21) claims 1-2, 6, paragraphs [0001], [0007], [0011], [0019], [0020], examples | 7-9 |
| A | claims 1-2, 6, paragraphs [0001], [0007], [0011], [0019], [0020], examples | 1-6 |

Form PCT/ISA/210 (second sheet) (January 2015)

**INTERNATIONAL SEARCH REPORT**
Information on patent family members

International application No.

**PCT/JP2023/021040**

| Patent document cited in search report | | | Publication date (day/month/year) | Patent family member(s) | Publication date (day/month/year) |
|---|---|---|---|---|---|
| JP | 2006-152454 | A | 15 June 2006 | (Family: none) | |
| JP | 2019-26963 | A | 21 February 2019 | (Family: none) | |
| JP | 2014-194106 | A | 09 October 2014 | (Family: none) | |
| JP | 2004-90456 | A | 25 March 2004 | (Family: none) | |
| JP | 10-237372 | A | 08 September 1998 | (Family: none) | |
| JP | 2011-251436 | A | 15 December 2011 | (Family: none) | |
| JP | 2014-176996 | A | 25 September 2014 | (Family: none) | |
| JP | 2006-342455 | A | 21 December 2006 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04259590 A
- JP H0692010 A
- JP H10237372 A
- JP 2004090456 A